# EUROPEAN PATENT SPECIFICATION

(11) **EP 3 426 830 B1**
(45) Date of publication and mention of the grant of the patent: **05.11.2025**
(21) Application number: 17712550.7
(22) Date of filing: 10.03.2017
(51) Int. Cl.: C23C 28/00

(54) **METALLIC SULFIDE COATED TRAVELERS OR SPINNING RING, METHODS OF COATING TRAVELERS OR SPINNING RING**
LÄUFER ODER SPINNRING MIT EINER METALSULFIDBESCHICHTUNG, HERSTELLUNGSMETHODE DAVON
CURSEUR ET ANNEAU POUR MÉTIER À FILER TYPE À ANNEAU COMPORTANT UN REVÈTEMENT DE SULFIDE MÉTALIQUE, MÉTHODE DE FABRICATION DESDITS CURSEUR ET ANNEAU

(30) Priority: 10.03.2016 US 201662306255 P
(43) Date of publication of application: 16.01.2019
(73) Proprietor: AB Carter, Inc., Gastonia, NC 28053 (US)
(72) Inventor: CRAIG, Richard Kennedy, Gastonia North Carolina 28053 (US); RANKIN, Fred Pearson, Gastonia, North Carolina 28053 (US); ABEDI-ASI, Behzad, Gastonia, North Carolina 28053 (US); POQUETTE, Gereon, Johnstown, Colorado 80534 (US); HOPKINS, Taylor Ross, Belmont, NC 28012 (US)
(74) Representative: Bandpay & Greuter
(86) International application number: PCT/IB2017/051427
(87) International publication number: WO 2017/153969

(56) References cited:
- JP-A- 2000 054 232
- JP-A- S5 725 424
- JP-A- S62 125 023
- JP-A- S62 177 239
- US-A- 2 970 425
- US-A- 3 248 251
- US-A- 5 086 615
- US-B1- 6 517 898

## Description

### FIELD

The present invention relates to a traveler for textile yarn spinning and more specifically relates to a traveler having a metallic sulfide coating on the surface of the traveler.

### BACKGROUND

In conventional and compact spinning and twisting operations, spinning or twisting rings are used to support a traveler that moves rapidly around the circumference of the spinning ring. The traveler engages and guides a loose yarn, as it is being twisted and wound onto a bobbin.

An increase in spinning speed increases the rate at which the traveler rotates around the surface of the spinning ring thereby also increasing the centrifugal force applied between the traveler and the ring. In turn, the greater centrifugal force increases frictional heating of the traveler and the spinning ring while also increasing the abrasive force applied to the traveler and to the spinning ring. Accordingly, spinning speed increases can cause burn-off and/or shortening of the lifetime of the traveler, and also typically decrease the lifetime of the spinning ring because the bearing surface of the ring can spall, chip, or otherwise become roughened.

As spinning speeds are increased the resulting increase in frictional or abrasive forces between the traveler and spinning ring can cause breaks in the yarn being spun or twisted. Yarn breaks are particularly undesirable because they lead to downtime in the spinning operation and, thus, a lower manufacturing efficiency. In the case of vertical spinning rings (also referred to in the textile industry as conical spinning rings), the yarns that are manufactured on such rings are typically expensive yarns and, as such, yarn breaks cause undesirable material waste. In general, for a given spinning ring and traveler combination, there exists a practical spinning speed limit that cannot be exceeded without frequent breakage of yarns. For this reason, the choice of traveler and spinning rings (i.e. the construction of the traveler and spinning rings) can have a substantial impact on manufacturing efficiency.

US5086615 discloses rings and travelers with a coating on the respective surfaces thereof, the coating including from about 15% to about 30% by volume of a particulate polymeric fluorocarbon, dispersed in a metallic matrix which is preferably a nickel-phosphorus alloy matrix.

US3248251 discloses coating and bonding compositions for coating metal surfaces. Said compositions comprise an aqueous solution containing phosphate anion, anion selected from chromate, molybdate and their mixtures, and metal cation.

JPS62177239 discloses applying a hard layer comprising vanadium carbide, chromium carbide, titanium nitride, titanium carbide, silicon carbide, alumina, etc... on a ring for spinning frame. The layer is coated with a self-lubricating film, for example plated film of a metal such as silver, tin, lead, etc., molybdenum disulfude, hexagonal boron nitride, etc

JP2000054232 discloses a metallic traveler the surface of which is provided with a zinc calcium phosphate film, said film is coated with a layer of an epoxy resin in which molybdenum disulfide and graphite are dispersed.

US6517898 discloses a corrosion and erosion resistant metal article coated with a base coat comprising at least one layer of inorganic particulate material. A second coating layer applied on the base coat comprises a cured coating of solid particulate lubricant in a phosphate/chromate metal ion solution.

US2970425 discloses a spinning ring having a macroscopically smooth surface exhibiting depressions and protuberances, a coating of nickel deposited by electroplating on said surface, the nickel coating filing the depressions and protuberances of the surface.

JPS62125023 discloses a metallic traveller obtained by forming a film of coating on a sliding face between a metallic face of the metallic traveller and a ring, said coating comprising an epoxy resin of epichlorohydrin type containing molybdenum (diselenide) fine particles, graphite and metallic powder.

Applicant has identified deficiencies and problems associated with conventional and compact spinning travelers and systems using such travelers. Through applied effort, ingenuity, and innovation, certain of these identified problems have been solved by developing solutions that are included in various embodiments of the present invention, which are described in detail below.

### SUMMARY

Embodiments of the present invention therefore provide improved spinning travelers, methods of preparing such travelers, and systems utilizing such travelers. Travelers in accordance with embodiments of the present invention may help provide reduced friction, reduced yarn loading, and reduced heat generation. As a result, embodiments of the invention may help provide one or more of reduced traveler wear, increased traveler life, and increased spinning speeds.

The present invention provides for travelers for the textile industry having a metallic sulfide coating. The metallic sulfide coating provides an improved surface for contact with yarn and spinning rings. The metallic sulfide coating reduces yarn loading (e.g., loose fibers, lint, etc.) on the traveler, thereby avoiding additional weight on the traveler. Such additional weight will increase the centrifugal force and results in premature traveler wear and "fly off" (where the traveler flies off the ring). Yarn loading on the traveler can also increase tension in the yarn, which can change yarn properties or break the yarn (referred to as "end down") resulting in stops in production and loss in efficiency. In conventional spinning, loose cotton fibers may help provide a natural form of lubrication. In some instances, the described metallic sulfide coating may provide sufficient lubrication to the spinning operation to thereby reduce the need for natural lubrication, such as in compact spinning processes.

The present invention also provides spinning rings for the textile industry having a metallic sulfide coating. The present inventors have found that application of the metallic sulfide coating to both the traveler and the spinning ring or to just the spinning ring may reduce the break-in period of the ring. During the break-in period of the traveler, the metallic sulfide coating may allow for the speed to be increased to normal operating conditions earlier than previous spinning rings and thereby increase manufacturing efficiencies. In addition, the metallic sulfide coating may help provide an overall increase in spinning speeds beyond which the production facility (e.g., a mill) is currently able to achieve with conventional travelers.

In certain embodiments, the traveler and/or spinning ring comprise a base material and a metallic sulfide coating, wherein the metallic sulfide coating directly coats the base material. In some embodiments, the metallic sulfide coating comprises tungsten disulfide, while in some embodiments, the metallic sulfide coating consists essentially of tungsten disulfide.

In some embodiments, the traveler comprises a base material wherein the base material comprises an elongate body with a first end and a second end wherein the first end and the second end are bent towards each other. The base material may then be coated with the metallic sulfide coating.

In certain embodiments, the traveler and/or spinning ring comprise a base material, an undercoat layer deposited on the base material, and a metallic sulfide coating deposited on the undercoat layer, wherein the metallic sulfide coating comprises tungsten disulfide and the undercoat layer comprises one or more of black oxide, nickel, nitrided steel, manganese phosphate, and chromium. In certain embodiments, the metallic sulfide coating consists essentially of tungsten disulfide.

In some embodiments, the traveler and/or spinning ring comprises a base material, a binder deposited on the base material, and a metallic sulfide material, wherein the metallic sulfide material comprises tungsten disulfide. The binder comprises one or more metals, such as those described above in connection with an undercoat layer, polymers, and phosphates, and the binder comprises a matrix and the metallic sulfide material is dispersed throughout the matrix. In some embodiments, the metallic sulfide material is tungsten disulfide.

In some embodiments, the base material comprises alloy steel. In certain embodiments, the metallic sulfide coating coats each side of the traveler and may encapsulate the base material. The metallic sulfide coating may coat each side of the spinning ring and may encapsulate the base material of the spinning ring.

Aspects of the present invention are also directed to a system for spinning yarn on a bobbin comprising a bobbin, a spinning ring positioned around the bobbin, and a traveler disposed along the spinning ring, wherein the traveler comprises a base material and a metallic sulfide coating, wherein the metallic sulfide coating directly coats the base material. In some embodiments of the present invention, the metallic sulfide coating consists essentially of tungsten disulfide. In certain embodiments, the spinning ring is also coated with a metallic sulfide coating.

Aspects of the present invention are also directed to methods of preparing a metallic sulfide coated traveler and/or metallic sulfide coated spinning ring. In some embodiments, the method comprises applying the metallic sulfide as a coating on the traveler and/or spinning ring to prepare a coated traveler wherein the metallic sulfide is a dry powder of tungsten disulfide. Examples of methods that can be used to apply the metallic sulfide include impinging, such as dry and liquid spray coating, and burnishing.. Still further, the method comprises applying an undercoat layer to the traveler and/or spinning ring prior to applying metallic sulfide wherein the undercoat layer comprises one or more of black oxide, nickel, nitrided steel, manganese phosphate, and chromium.

The method comprises applying a binder to the traveler and/or spinning ring with the metallic sulfide where the binder is a matrix and the metallic sulfide is dispersed throughout the matrix, and where the binder comprises one or more metals, polymers, and phosphates.

In burnishing, the metallic sulfide may be applied onto the traveler surface by rubbing and/or polishing. For example, in some embodiments, the metallic sulfide is a dry powder of tungsten disulfide that is applied by burnishing the tungsten disulfide onto the surface of the traveler. In one embodiment, the method comprises applying an undercoat layer to the traveler and/or spinning ring prior to burnishing metallic sulfide onto the traveler. In some embodiments, the method comprises applying a binder with the metallic sulfide, while in some embodiments, the method comprises applying a binder to the traveler and/or spinning ring prior to burnishing metallic sulfide.

The travelers and/or spinning rings of the present invention comprise a metallic sulfide coating, such as molybdenum sulfide, rhenium sulfide, and tungsten disulfide or the like, having a thickness less than about 0.06 mil (0.00006 in.). The coating can be applied to travelers and/or spinning rings formed from conventional base metals, such as carbon steels and steel alloys, or polymers, such as polyamides (e.g., Nylon), as well as other suitable base materials, such as fiberglass, and mixtures thereof. In embodiments including a binder, the thickness of the binder may be from about 0.01 mils to about 2 mils.

These embodiments of the present invention and other aspects and embodiments of the present invention are described further herein and will become apparent upon review of the following description taken in conjunction with the accompanying drawings.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1(A) illustrates an embodiment of the present invention comprising a metallic sulfide coating applied directly to the base material of the traveler;
FIG. 1(B) is a cross-section of a traveler taken along line 1(B) of FIG. 1(A);
FIG. 2(A) illustrates an embodiment of the present invention in which an undercoat layer is applied to the base material of the traveler and the metallic sulfide coating is subsequently applied to the undercoat layer;
FIG. 2(B) is a cross-section of a traveler taken along line 2(B) of FIG. 2(A);
FIG. 3(A) illustrates an embodiment of the present invention in which metallic sulfide is applied with a binder to the traveler;
FIG. 3(B) is a cross-section of a traveler taken along line 3(B) of FIG. 3(A); and
FIG. 4 illustrates an embodiment of the present invention comprising a system utilizing a metallic sulfide coated traveler in accordance with at least one embodiment of the present invention.

### DETAILED DESCRIPTION

The present invention now will be described more fully hereinafter with reference to the accompanying drawings, in which some, but not all embodiments of the invention is shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

As used in the specification and in the appended claims, the singular forms "a", "an", and "the" include plural referents unless the context clearly indicates otherwise. For example, reference to "a traveler" includes a plurality of such travelers, unless the context clearly indicates otherwise.

"Consisting essentially of" or "consists essentially of," as used herein, refers to embodiments where the respective element includes the recited material or step and minor materials or steps that do not materially affect the disclosed benefits of the respective element. "Consisting of" or "consists of," as used herein, refers to the respective element limited to the recited material or step and trace impurities.

"Traveler" as used herein refers to spinning travelers used in the textile industry to wind yarn on a bobbin. As generally known in the art, a "traveler" may also be referred to as "travellers," "spinning travelers," and "ring travelers."

The present inventors have found that application of the disclosed metallic sulfide coating to a traveler provides an improved traveler with reduced yarn loading, reduced heat generation, and reduced wear. The metallic sulfide coating reduces friction between the yarn and the traveler, as well as between the traveler and the ring, thereby reducing friction, yarn loading, and heat generation. This in turn, may help reduce traveler wear, increase traveler life, and help achieve increased spinning speeds. Yarn loading (e.g., loose fibers, lint, etc.) on the traveler adds weight to the traveler, which increases the centrifugal force and results in premature traveler wear and fly off. Yarn loading on the traveler can also increase tension in the yarn, which can change yarn properties or break the yarn (referred to as "end down"). Such change in properties or breakage may lead to stops in production and loss in efficiency. With reduced heat generation, micro welding may be reduced between the traveler and associated ring. Micro welding is caused by high temperatures induced when the traveler moves across asperities or rough areas on the surface of the traveler and ring. Application of the disclosed metallic sulfide coatings to a traveler may reduce the occurrence of micro welding. For instance, the inventors have found that sulfides react with metals at high temperatures, such as the high temperatures experienced during operation of the traveler, and, thus, prevent cohesion or welding with an associated spinning ring. By limiting or controlling the degree of wear experienced by the traveler, the overall reliability of the spinning operation results in consistent spinning performance over the life of the traveler.

Another significant advantage of the present metallic sulfide coating is the elimination of the need for additional or natural lubricants in the spinning process. In many temperature sensitive spinning operations a lubricating fluid may be required to impart the necessary lubricity to the spinning operation. In conventional spinning operations, loose cotton fibers may help provide a natural lubricant. In some spinning operations, such as compact spinning, there is a lack of loose cotton fibers, which leads to a lack of lubrication. In certain embodiments, the metallic sulfide coating provides sufficient lubrication such that natural lubricants may not be needed.

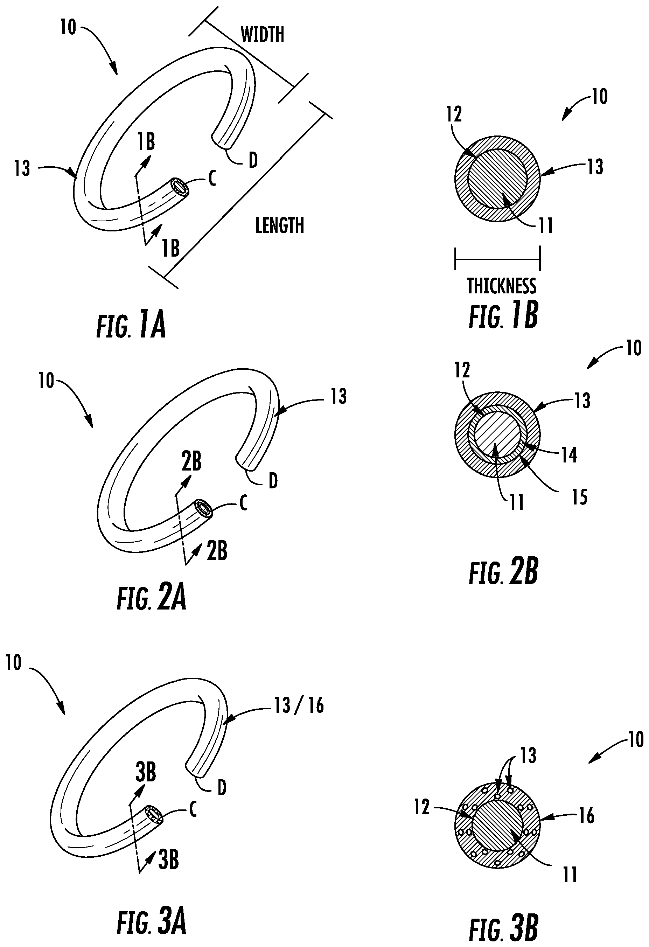

FIG. 1(A) illustrates an embodiment of the present invention comprising a metallic sulfide coating applied directly to the base material of the traveler. FIG. 1(B) is a cross-section of a traveler taken along line 1(B) of FIG. 1(A). In the embodiment illustrated in FIGS. 1(A) and 1(B), the traveler 10 includes a base material 11 and a metallic sulfide coating 13. The base material has an outer surface 12. As shown in this embodiment, the metallic sulfide coating can be applied directly to the base material without an intervening layer (e.g., without a binder or additional coating). For instance, as shown in FIG. 1(B), the metallic sulfide coating 13 is applied to the outer surface 12 of the base material 11.

As shown in FIGS. 1(A) and 1(B), in some embodiments, the metallic sulfide coating coats the base material on all sides of the traveler. In some embodiments, the metallic sulfide coating is applied to the sides of the traveler that come in contact with the spinning ring and yarn, while in other embodiments, the metallic sulfide coating encapsulates the base material of the traveler such that the base material is not exposed to the environment. The metallic sulfide coating preferably includes one or more of molybdenum sulfide, rhenium sulfide, and tungsten disulfide, more preferably tungsten disulfide. In further embodiments, the metallic sulfide coating consists essentially of one of molybdenum sulfide, rhenium sulfide, and tungsten disulfide. Still further, in certain embodiments, the metallic sulfide coating consists of one of molybdenum sulfide, rhenium sulfide, and tungsten disulfide. For instance, in certain embodiments, the inventors have found the benefits of reduced yarn loading, reduced heat generation, and reduced traveler wear can be obtained with a traveler directly coated with a metallic sulfide coating consisting of one of molybdenum sulfide, rhenium sulfide, and tungsten disulfide, preferably tungsten disulfide.

The traveler can have numerous and varying shapes and sizes as will be apparent to the skilled artisan. The shape and structure of the traveler will vary depending on the construction of the particular spinning equipment and yarn for spinning as is also known to the skilled artisan. In this regard, FIGS. 1(A)-3(A) show a traveler having a generally elongate cylindrical body with a first end C and a second end D where the first end C and the second end D are bent towards each other. The ends may be generally facing each other without touching. The cross-section of the elongate body may be generally circular, rectangular, convex, or a variety of cross-sections to meet the needs of the spinning ring and yarn. The elongate body may be referred to as the "wire" and the cross-section as the "wire shape."

In addition, the ends of the elongate body may be bent such that the body generally forms an open circle (such as shown in FIGS. 1(A)-3(A)) or be bent such that the body generally forms an open rectangle. The ends may be bent to various degrees such that the traveler is appropriate for the spinning ring and yarn.

The size of the traveler may vary and will generally be between about 1 mm to about 50 mm in length, more preferably between about 5 mm and about 30 mm in length, such as about 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, and 29 mm in length.

The width of the traveler may vary as well and will generally be between about 1 mm to about 50 mm in width, more preferably between about 5 mm and about 30 mm in width, such as about 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, and 29 mm in width.

The cross-section of the traveler may have various thicknesses depending on the shape and will generally be between about 1 mm to about 30 mm in thickness, such as about 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, and 29 mm in thickness. For instance, the length, width, and thickness of the traveler in FIG. 1(A) is illustrated in the corresponding figure. The length, width, and thickness may similarly apply to FIGS. 2(A)-3(B) as well.

As also shown in FIG. 1(B), the metallic sulfide coating 13 is deposited on the outer surface 12 of the base material 11. In certain embodiments, the metallic sulfide coating is applied by direct impingement or by burnishment of dry powder metallic sulfide onto the traveler. *See* Dry Lubricant Smooths the Way for Space Travel, NASA Spinnoff: Technology Transfer Program (retrieved February 1, 2016) and A Spinoff from Mariner, Industrial Productivity and Manufacturing Technology, 108-09 (1989). The metallic sulfide coating can also be applied on a traveler coated with an undercoat and/or binder.

The metallic sulfide coating of the present invention is typically formed to have a thickness up to about 0.020 mil (0.000020 in.), such as 0.001 mil, 0.002 mil, 0.003 mil, 0.004 mil, 0.005 mil, 0.006 mil, 0.007 mil, 0.008 mil, 0.009 mil, 0.01 mil, 0.011 mil, 0.012 mil, 0.013 mil, 0.014 mil, 0.015 mil, 0.016 mil, 0.017 mil, 0.018 mil, 0.019 mil, and 0.02 mil. *See* Dry Lubricant Smooths the Way for Space Travel, NASA Spinnoff: Technology Transfer Program (obtained February 1, 2016) and A Spinoff from Mariner, Industrial Productivity and Manufacturing Technology, 108-09 (1989). The metallic sulfide coatings preferably include one or more of molybdenum sulfide, rhenium sulfide, and tungsten disulfide. Preferably, the metallic sulfide coating comprises tungsten disulfide. The coating can be applied to travelers formed from conventional base metals, such as carbon steels and steel alloys, or polymers, such as polyamides (e.g., Nylon), as well as other suitable base materials, such as fiberglass and mixtures thereof, such as fiberglass reinforced Nylon or metal inserted Nylon. For instance, in preferred embodiments, the traveler comprises a base material of steel coated with tungsten disulfide.

FIG. 2(A) illustrates an embodiment of the present invention in which an undercoat layer is applied to the base material of the traveler and the metallic sulfide coating is subsequently applied to the undercoat layer. FIG. 2(B) is a cross-section of a traveler taken along line 2(B) of FIG. 2(A). As shown in FIGS. 2(A) and 2(B), an undercoat layer 14 is applied to an outer surface 12 of the base material 11 of the traveler 10 and the metallic sulfide coating 13 is subsequently applied to an outer surface 15 of the undercoat layer 14. The undercoat layer can be any suitable material for use with the metallic sulfide coating and may provide additional benefits to the traveler. For instance, undercoat layers such as black oxide, nickel or chrome plating, nitrided steel, and other bare ferrous and nonferrous metals and alloys may be applied to the traveler. In certain embodiments, corrosion resistance may be particularly important for the traveler as it is often the case that travelers are shipped to various parts of the world. To improve the corrosion resistance of the present travelers, certain undercoat layers, such as black oxide, nickel, manganese phosphate, and mixtures thereof, may be applied to the base material prior to application of the metallic sulfide coating. The undercoat layers may be applied by any suitable method appropriate for the traveler, for instance, electrolytically, auto-catalytically, spraying, or by immersion. The undercoat layer may be any suitable thickness, such as 0.00001 in. to 0.002 in. The subsequent formation of the metallic sulfide coating may be modified in view of the respective undercoat layer.

FIG. 3(A) illustrates an embodiment of the present invention in which metallic sulfide is applied with a binder to the traveler. FIG. 3(B) is a cross-section of a traveler taken along line 3(B) of FIG. 3(A). In the particular embodiment shown in FIGS. 3(A) and 3(B), metallic sulfide 13 is blended in a matrix of binder 16. The metallic sulfide/binder matrix (13/16) is applied directly to the outer surface 12 of the base material 11 of the traveler 10. In certain other embodiments, a binder may be applied directly to the outer surface 12 of the base material of the traveler and the metallic sulfide coating may subsequently be applied to the outer surface of the binder. In some embodiments, an undercoat layer may be applied to the traveler in addition to a binder and metallic sulfide coating. Various binders may be used, such as metallic, polymer, and phosphate binders and the like. The binders may be applied by any suitable method appropriate for the traveler and may be applied with the metallic sulfide coating or prior to application of the metallic sulfide coating. The thickness of the binder may range from about 0.01 to 2 mils.

Additional additives may be used with any of the above embodiments to further improve upon the disclosed metallic sulfide coated traveler. For instance, it may be preferred to use metallic phosphate binders blended or layered with the metallic sulfide coating.

Additional embodiments of the present invention include one or more metallic sulfide coatings, such as a plurality of metallic sulfide coatings, on a traveler alone or in combination with one or more binders, metallic sulfide/binder matrixes, undercoat layers, and combinations thereof. For instance, one or more metallic sulfide coatings may be applied to a traveler with or without intervening layers of undercoats and binders.

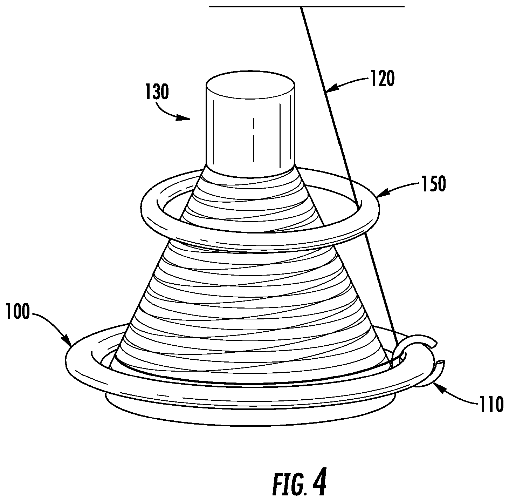

FIG. 4 illustrates an embodiment of the present invention comprising a system utilizing a metallic sulfide coated traveler in accordance with at least one embodiment of the present invention. In the embodiment illustrated in FIG. 4, the system comprises a metallic sulfide coated traveler 110 that travels along a ring 100 to wind yarn 120 onto a bobbin 130. FIG. 4 also illustrates a guide 150 that helps guide the yarn through the traveler. A plurality of such systems for using the metallic sulfide coated traveler can be used to wind yarn on multiple bobbins. A vertical spinning ring is typically mounted to a frame that provides for the ring to be secured to the frame via a horizontal mount positioned about the exterior surface of the vertical spinning ring. This mounting configuration is in contrast to a horizontal spinning ring, which is secured to a frame via a vertical mount positioned about the bottom side of the spinning ring. The present metallic sulfide coated traveler may be used with either vertical or horizontal spinning rings.

As explained above, various embodiments are possible for preparing metallic sulfide coated travelers (e.g., utilizing binders, metallic sulfide/binder matrixes, undercoat layers, multiple layers, etc.). Any of these metallic sulfide coated travelers may be used in embodiments of the present system. Further, the metallic sulfide coated travelers of the present invention can be used with any suitable yarns. The obtained benefits of the metallic sulfide coating, such as reduced yarn loading, reduced wear, reduced heat generation, are applicable to a variety of yarns, both natural and synthetic. For instance, the disclosed metallic sulfide coated travelers may be used with long staple yarns, continuous filament yarns, synthetics, temperature sensitive fibers, abrasive fibers, non-lubricated fibers, spin short staple, cotton, cotton-blend fibers, or the like.

The spinning ring for the system utilizing the metallic sulfide coated traveler can be any suitable spinning ring appropriate for the traveler. For example, metallic (e.g., chrome coated rings) and polymeric rings may be used with the metallic sulfide coated traveler. For instance, the spinning ring may comprise a chromium coating, such as nodular chromium, amorphous chromium or any other suitable chromium coating, or a nickel-based material, such as a nickel-diamond composite or the like. Ceramic coatings may also be used, such as alumina, titania, zirconia or the like.

In certain embodiments, the spinning ring is coated with the disclosed metallic sulfide coating as explained above in reference to travelers. For instance, in some embodiments, the spinning ring comprises one or more layers of molybdenum sulfide, rhenium sulfide, and tungsten disulfide, preferably tungsten disulfide. As shown in FIG. 4, the spinning ring 100 may be a cylindrical elongate body positioned around the bobbin. The spinning ring can comprise a base material, such as carbon steels and steel alloys. The metallic sulfide coating can be applied to the sides of the spinning ring that come in contact with the traveler and yarn, while in other embodiments, the metallic sulfide coating encapsulates the spinning ring such that the base material of the spinning ring is not exposed to the environment. The metallic sulfide coating may be impinged or burnished on the spinning ring and may be applied directly to the spinning ring. The metallic sulfide coating preferably includes one or more of molybdenum sulfide, rhenium sulfide, and tungsten disulfide, more preferably tungsten disulfide. In further embodiments, the metallic sulfide coating consists essentially of one of molybdenum sulfide, rhenium sulfide, and tungsten disulfide. Still further, in certain embodiments, the metallic sulfide coating consists of one of molybdenum sulfide, rhenium sulfide, and tungsten disulfide.

The metallic sulfide coating of the present invention is typically formed to have a thickness up to about 0.060 mil (0.000060 in.), such as 0.001 mil, 0.002 mil, 0.003 mil, 0.004 mil, 0.005 mil, 0.006 mil, 0.007 mil, 0.008 mil, 0.009 mil, 0.01 mil, 0.011 mil, 0.012 mil, 0.013 mil, 0.014 mil, 0.015 mil, 0.016 mil, 0.017 mil, 0.018 mil, 0.019 mil, 0.020 mil, 0.021 mil, 0.22 mil, 0.023 mil, 0.024 mil, 0.025 mil, 0.026 mil, 0.027 mil, 0.028 mil, 0.029 mil, 0.030 mil, 0.031 mil, 0.032 mil, 0.033 mil, 0.034 mil, 0.035 mil, 0.036 mil, 0.037 mil, 0.038 mil, 0.039 mil, 0.040 mil, 0.041 mil, 0.042 mil, 0.043 mil, 0.044 mil, 0.045 mil, 0.046 mil, 0.047 mil, 0.048 mil, 0.049 mil, 0.050 mil, 0.051 mil, 0.052 mil, 0.053 mil, 0.054 mil, 0.055 mil, 0.056 mil, 0.057 mil, 0.058 mil, 0.059 mil, and 0.060 mil. *See* Dry Lubricant Smooths the Way for Space Travel, NASA Spinnoff: Technology Transfer Program (obtained February 1, 2016) and A Spinoff from Mariner, Industrial Productivity and Manufacturing Technology, 108-09 (1989).

The present inventors have found that application of the metallic sulfide coating to both the traveler and the spinning ring or to just the spinning ring may reduce the break-in period of the ring. During the break-in period, the spinning equipment is operated at a relatively low spinning speed because the surface of the spinning ring is initially too rough to allow operation at high speed. The low speed spinning operation allows the initially rough surface of the spinning ring to be conditioned by contact with a moving traveler. Such break-in periods can last for time periods of one month or longer, thus substantially decreasing manufacturing efficiencies. However, the presence of the metallic sulfide coating on both the traveler and the spinning ring or on just the spinning ring may reduce the break-in period to a matter of days. The metallic sulfide coating may allow for the speed to be increased to normal operating conditions earlier than previous spinning rings and thereby increase manufacturing efficiencies.

In some embodiments, the spinning ring may be coated with an undercoat layer and/or binder as described above in reference to travelers and may have additives as explained above in reference to travelers. For instance, the spinning ring may be coated with an undercoat layer comprising one or more of black oxide, nickel, nitrided steel, manganese phosphate, and chromium. The spinning ring may comprise a binder comprising one or more metals, polymers, and phosphates, and in some embodiments, the binder may be a matrix with metallic sulfide material dispersed throughout the matrix.

It will be apparent to the skilled artisan that the ring can have any of various cross-sectional shapes (e.g., circular, rectangular, square, etc.) for cooperating with the corresponding traveler and yarn. Any suitable bobbin may be used as well, such as bobbins comprising polycarbonate, ABS (acrynitril-butadien-styrol), polypropylene, and the like.

The invention has been described in detail with reference to its preferred embodiments. However, numerous variations and modifications can be made within the spirit and scope of the invention without departing from the invention as described in the foregoing detailed specification and defined in the appended claims.

### EXAMPLES

In the following examples the effectiveness of the metallic coating for extending the life of the traveler was evaluated.

In a first trial, two sets of travelers, "Set A" having a metallic sulfide coating (tungsten disulfide) and "Set B" without a metallic sulfide coating, were compared. The travelers for both Sets A and B were obtained from the same production lot, and included a nickel coating. A coating of tungsten disulfide was burnished onto the travelers of Set A. The travelers had a weight of 31.5 mg as measured in accordance with ISO 96-1:2016.

Each set were run at about 16,000 RPM on a conventional spinning frame at a production facility. A group of each set of travelers were examined at 7 day intervals, and an average weight for each traveler was measured. Each group of SETS A and B included 100 travelers. The results are summarized in Table 1, below.

**TABLE 1: Results of Comparison of WS2 coated travelers to uncoated travelers.**

| Trial Set | Before | After | Weight loss grams/100 pieces | Percentage weight loss (%) |
|---|---|---|---|---|
| | grams/100 pieces | grams/100 pieces | | |
| SET B | 3.162 | 3.153 | 0.009 | 0.28% |
| Group 1 (7 Days) | | | | |
| SET B | 3.167 | 3.152 | 0.015 | 0.48% |
| Group 2 (14 Days) | | | | |
| SET B | 3.171 | 3.153 | 0.017 | 0.55% |
| Group 3-5 (18 Days) | | | | |
| SET A (with WS₂ coating) | 3.162 | 3.159 | 0.003 | 0.08% |
| Group 1 (7 Days) | | | | |
| SET A (with WS₂ coating) | 3.166 | 3.152 | 0.014 | 0.44% |
| Group 2 (14 Days) | | | | |
| SET A (with WS₂ coating) | 3.160 | 3.143 | 0.017 | 0.53% |
| Group 3 (21 Days) | | | | |
| SET A (with WS₂ coating) | 3.163 | 3.130 | 0.033 | 1.03% |
| Group 4 (28 Days) | | | | |
| SET A (with WS₂ coating) | 3.156 | 3.130 | 0.026 | 0.83% |
| Group 5 (35 Days) | | | | |

The travelers from Set A exhibited about 10% less wear than the corresponding travelers from Set B, through the first 14 days. The remaining travelers from Set B were removed after 18 days due to excessive ends down. The travelers from Set A that were examined after 21 days had about 10% less wear than the travelers from Set B that were removed after 18 days. The travelers from Set A ran the entirety of the planned 35 day trial. The travelers from Set A were removed after 35 days as planned and not due to poor performance. The results of the trial demonstrate that the metallic sulfide coating essentially doubled the effective life of the travelers tested. It was also noted, visually, that the travelers with a metallic sulfide coating had less yarn loading.

In a second trial, a trial having two sets of travelers, "Set A" with a metallic sulfide coating and "Set B" without a metallic sulfide coating, from the same production batch with an undercoat of nickel were evaluated. The travelers had a weight of 112 mg as measured in accordance with ISO 96-1:2016. The travelers of each set were run at about 10,500 RPM on a compact spinning frame at a production facility. The typical change cycle for the travelers currently used at this plant was 10 days. The travelers from Set B ran for 14 days. The travelers from Set A were removed after 21 days, but not due to poor performance. In several follow up trials at the same facility, travelers similar to Set A ran for 28 days. In this instance, the metallic sulfide coating essentially doubled the effective life of the travelers tested, and provided triple the life of the current traveler used. Results are summarized in TABLE 2, below.

**TABLE 2: Evaluation of the effect of metallic sulfide coating in compact spinning**

| **Trial Results** (Weight loss data was not tracked as the traveler life was the result of interest) | | | |
|---|---|---|---|
| | SET B | SET A | Notes |
| First Trial | 14 | 21 | Removed Nickel w/WS₂ despite not failing |
| Second Trial | 14 | 28 | Nickel w/WS₂ ran 28 days without issue |
| Third Trial | 14 | 28 | Nickel w/WS₂ ran 28 days without issue |

### Tungsten disulfide coated traveler.

Two travelers were tested, both with identical geometry, weight, and from the same production lot. The first traveler was coated with black oxide and the second traveler was coated with tungsten disulfide. The two travelers were used to wind 40 cotton count yarn at 18,400 RPM for one hour followed by 17,700 RPM for two hours on a laboratory spin test frame. The tungsten disulfide coated traveler was found to have 79.5% less wear than the black oxide coated traveler as determined by weight loss.

### Tungsten disulfide coated traveler with black oxide undercoat layer.

Two travelers were tested, both with identical geometry, weight, and from the same production lot. The first traveler was coated with black oxide and the second traveler was coated with black oxide and an overcoat layer of tungsten disulfide. The two travelers were used to wind 40 cotton count yarn at 18,400 RPM for one hour followed by 17,700 RPM for two hours on a laboratory spin test frame. The black oxide plus tungsten disulfide coated traveler was found to have 77% less wear than the black oxide coated traveler as determined by weight loss.

## Claims

1. A textile spinning traveler or spinning ring comprising:
a base material,
an undercoat layer deposited on the base material, and
a metallic sulfide coating deposited on the undercoat layer, wherein the metallic sulfide coating comprises tungsten disulfide, wherein the undercoat layer comprises one or more of black oxide, nickel, nitrided steel, manganese phosphate, and chromium.

2. The textile spinning traveler or spinning ring of claim **1,** wherein the undercoat layer comprises one or more of black oxide and nickel.

3. The textile spinning traveler or spinning ring of claim **1,** wherein the metallic sulfide coating consists essentially of tungsten disulfide.

4. A textile spinning traveler or spinning ring comprising:
a base material,
a binder deposited on the base material, and
a metallic sulfide material, wherein the metallic sulfide material comprises tungsten disulfide, wherein the binder comprises one or more metals, polymers, and phosphates, and wherein the binder is a matrix and the metallic sulfide material is dispersed throughout the matrix.

5. The textile spinning traveler or spinning ring of claim **4,** wherein the binder comprises one or more metals.

6. The textile spinning traveler or spinning ring of claim **4,** wherein the metallic sulfide material consists essentially of tungsten disulfide.

7. A method of preparing a metallic sulfide coated traveler or spinning ring comprising:
applying metallic sulfide on the traveler or the spinning ring to prepare a coated traveler or coated spinning ring, wherein the metallic sulfide is a dry powder of tungsten disulfide; and
applying an undercoat layer to the traveler or the spinning ring prior to applying metallic sulfide, wherein the undercoat layer comprises one or more of black oxide, nickel, nitrided steel, manganese phosphate, and chromium.

8. The method of preparing the metallic sulfide coated traveler or spinning ring of claim 7, wherein the applying metallic sulfide on the traveler or the spinning ring to prepare the coated traveler or coated spinning ring comprises applying the metallic sulfide via impingement or via burnishment.

9. A method of preparing a metallic sulfide coated traveler or spinning ring comprising: applying a binder to a traveler or a spinning ring with metallic sulfide, wherein the binder is a matrix, wherein the metallic sulfide is a dry powder of tungsten disulfide, and the metallic sulfide is dispersed throughout the matrix, and wherein the binder comprises one or more metals, polymers, and phosphates.

## Patentansprüche

1. Textilringläufer oder Spinnring, umfassend:
ein Basismaterial,
eine Unterstoffschicht, die auf dem Basismaterial abgeschieden ist, und
eine Metallsulfidbeschichtung, die auf der Unterstoffschicht abgeschieden ist, wobei die Metallsulfidbeschichtung Wolframdisulfid umfasst, wobei die Unterstoffschicht eines oder mehrere aus Schwarzoxid, Nickel, Nitrierstahl, Manganphosphat und Chrom umfasst.

2. Textilringläufer oder Spinnring nach Anspruch 1, wobei die Unterstoffschicht eines oder mehrere von Schwarzoxid und Nickel umfasst.

3. Textilringläufer oder Spinnring nach Anspruch 1, wobei die Metallsulfidbeschichtung im Wesentlichen aus Wolframdisulfid besteht.

4. Textilringläufer oder Spinnring, der umfasst:
ein Grundmaterial,
ein Bindemittel, das auf dem Grundmaterial abgeschieden ist, und
ein Metallsulfidmaterial, wobei das Metallsulfidmaterial Wolframdisulfid umfasst, wobei das Bindemittel eines oder mehrere Metalle, Polymere und Phosphate umfasst, und wobei das Bindemittel eine Matrix ist und das Metallsulfidmaterial in der Matrix dispergiert ist.

5. Textilringläufer oder Spinnring nach Anspruch 4, wobei das Bindemittel ein oder mehrere Metalle umfasst.

6. Textilringläufer oder Spinnring nach Anspruch 4, wobei das Material aus Metallsulfidmaterial im Wesentlichen aus Wolframdisulfid besteht.

7. Verfahren zum Herstellen eines mit Metallsulfid beschichteten Ringläufers oder Spinnrings, umfassend:
Auftragen von Metallsulfid auf den Ringläufer oder den Spinnring, um einen beschichteten Ringläufer oder beschichteten Spinnring herzustellen, wobei das Metallsulfid ein Trockenpulver von Wolframdisulfid ist; und
Auftragen einer Unterstoffschicht auf den Ringläufer oder den Spinnring vor dem Auftragen von Metallsulfid, wobei die Unterstoffschicht eines oder mehrere von Schwarzoxid, Nickel, Nitridstahl, Manganphosphat und Chrom umfasst.

8. Verfahren zum Herstellen des mit Metallsulfid beschichteten Ringläufers oder Spinnrings nach Anspruch 7, wobei das Auftragen von Metallsulfid auf den Ringläufer oder den Spinnring, um einen beschichteten Ringläufer oder beschichteten Spinnring herzustellen, das Auftragen des Metallsulfids durch Beaufschlagen oder Polieren umfasst.

9. Verfahren zum Herstellen eines mit Metallsulfid beschichteten Ringläufers oder Spinnrings, umfassend: Auftragen eines Bindemittels auf einen Ringläufer oder einen Spinnring mit Metallsulfid, wobei das Bindemittel eine Matrix ist, wobei das Metallsulfid ein Trockenpulver von Wolframdisulfid ist und das Metallsulfid in der Matrix dispergiert wird, und wobei das Bindemittel ein oder mehrere Metalle, Polymere und Phosphate umfasst.

## Revendications

1. Curseur ou anneau de filature textile comprenant :
un matériau de base,
une couche d'apprêt déposée sur le matériau de base, et
un revêtement de sulfure métallique déposé sur la couche d'apprêt, dans lequel le revêtement de sulfure métallique comprend le disulfure de tungstène, dans lequel la couche d'apprêt comprend un ou plusieurs parmi l'oxyde noir, le nickel, l'acier nitruré, le phosphate de manganèse et le chrome.

2. Curseur ou anneau de filature textile selon la revendication 1, dans lequel la couche d'apprêt comprend un ou plusieurs parmi l'oxyde noir et le nickel.

3. Curseur ou anneau de filature textile selon la revendication 1, dans lequel le revêtement de sulfure métallique se compose essentiellement de disulfure de tungstène.

4. Curseur ou anneau de filature textile comprenant :
un matériau de base,
un liant déposé sur le matériau de base, et
un matériau de sulfure métallique, dans lequel le matériau de sulfure métallique comprend le disulfure de tungstène, dans lequel le liant comprend un ou plusieurs métaux, polymères et phosphates, et dans lequel le liant est une matrice et le matériau de sulfure métallique est dispersé dans la matrice.

5. Curseur ou anneau de filature textile selon la revendication 4, dans lequel le liant comprend un ou plusieurs métaux.

6. Curseur ou anneau de filature textile selon la revendication 4, dans lequel le matériau de sulfure métallique se compose essentiellement de disulfure de tungstène.

7. Procédé de préparation d'un curseur ou d'un anneau de filature revêtu de sulfure métallique comprenant :
l'application de sulfure métallique sur le curseur ou l'anneau de filature pour préparer un curseur revêtu ou un anneau de filature revêtu, dans lequel le sulfure métallique est une poudre sèche de disulfure de tungstène ; et
l'application d'une couche d'apprêt sur le curseur ou l'anneau de filature avant l'application de sulfure métallique, dans lequel la couche d'apprêt comprend un ou plusieurs parmi l'oxyde noir, le nickel, l'acier nitruré, le phosphate de manganèse et le chrome.

8. Procédé de préparation du curseur ou de l'anneau de filature revêtu de sulfure métallique selon la revendication 7, dans lequel l'application de disulfure métallique sur le curseur ou l'anneau de filature pour préparer le curseur revêtu ou l'anneau de filature revêtu comprend l'application du sulfure métallique par empiétement ou par brunissage.

9. Procédé de préparation d'un curseur ou d'un anneau de filature revêtu de sulfure métallique comprenant : l'application d'un liant sur un curseur revêtu ou un anneau de filature avec du sulfure métallique, dans lequel le liant est une matrice, dans lequel le sulfure métallique est une poudre sèche de disulfure de tungstène, et le sulfure métallique est dispersé dans la matrice, et dans lequel le liant comprend un ou plusieurs métaux, polymères et phosphates.
